Europäisches Patentamt

European Patent Office

Office européen des brevets

(11) Veröffentlichungsnummer: **0 306 623 B1**

# EUROPÄISCHE PATENTSCHRIFT

(45) Veröffentlichungstag der Patentschrift: **09.09.92**

(21) Anmeldenummer: **88108964.3**

(22) Anmeldetag: **04.06.88**

Teilanmeldung 92103138.1 eingereicht am 04/06/88.

(51) Int. Cl.⁵: **D06F 75/14**

(54) **Elektrisch betriebenes Dampfbügeleisen.**

(30) Priorität: **05.09.87 DE 3729800**

(43) Veröffentlichungstag der Anmeldung:
**15.03.89 Patentblatt 89/11**

(45) Bekanntmachung des Hinweises auf die
Patenterteilung:
**09.09.92 Patentblatt 92/37**

(84) Benannte Vertragsstaaten:
**CH FR GB IT LI NL SE**

(56) Entgegenhaltungen:
**DE-A- 2 242 402       DE-A- 3 014 493
DE-A- 3 033 964       GB-A- 1 022 697
JP-A-60 160 997       US-A- 3 949 499
US-A- 4 400 279       US-A- 4 565 019**

(73) Patentinhaber: **Robert Krups GmbH & Co. KG
Heresbachstrasse 29
W-5650 Solingen 19(DE)**

(72) Erfinder: **Mahlich, Gotthard Chr.
Am Frosthaus 2
W-6242 Kronberg(DE)**
Erfinder: **Borgmann, Michael
Dültgenstaler Strasse 14
W-5650 Solingen(DE)**

(74) Vertreter: **Buse, Karl Georg, Dipl.-Phys. et al
Patentanwälte Dipl.-Phys. Buse Dipl.-Phys.
Mentzel Dipl.-Ing. Ludewig Unterdörnen 114
Postfach 20 02 10
W-5600 Wuppertal 2(DE)**

**Beschreibung**

Die Erfindung bezieht sich auf ein elektrisch betriebenes Dampfbügeleisen mit einem einen Handgriff aufweisenden Gehäuse, dessen untere Öffnung durch eine mit Auslaßöffnungen versehene Sohlenplatte verschlossen ist sowie mit einem Wasserbehälter, einem Aufnahmeraum für ein Entkalkungsmittel, der sich an den Auslaß des Wasserbehälters anschließt und einer damit unter Zwischenschaltung einer Regeleinrichtung verbindbaren Verdampferkammer und mit einer regelbaren Heizeinrichtung.

Derartige elektrisch betriebene Dampfbügeleisen, die in unterschiedlichen Ausführungsformen bekannt sind, benötigen beim bestimmungsgemäßen Gebrauch die Verwendung von Wasser, welches verdampft werden muß. Häufig wird dabei von dem Benutzer Leitungswasser eingesetzt. Solches Leitungswasser ist chemisch gesehen nicht rein. Vielmehr enthält es neben aufgelösten Gasen eine Reihe von Salzen, die aus Böden, Gestein od.dgl. herausgelöst sind. Zu den Salzen, die im Leitungswasser enthalten sind, gehören u.a. Calciumbikarbonet, Calciumsulfat und Magnesiumkarbonat. Zusammenfassend bezeichnet man diese als "Härte" des Wassers. Zur Kennzeichnung der Härte des Wassers ist die Bezeichnung "Härtegrad" in Gebrauch. Je höher der Wert eines Härtegrades ist, umso härter ist das Wasser.

Bei der Benutzung elektrisch betriebener Dampfbügeleisen spielt die Härte des in den Wasserbehälter eingefüllten Wassers eine wesentliche Rolle und zwar deshalb, weil bei einer Erhitzung von Leitungswasser eine Abscheidung des Wassers in einzelne Bestandteile stattfindet. Ein Teil der abgeschiedenen Bestandteile, insbesondere die Karbonate schlagen sich als sogenannter "Kesselstein" an den wasserführenden Teilen des Dampfbügeleisens nieder. Kesselstein ist aus verschiedenen Gründen unerwünscht. Er wirkt einmal als Wärmeisolator, was sich in einem erhöhten Energieverbrauch niederschlägt. Darüber hinaus können aber Rohre oder durchmesserkleine Leitungen sich mit der Zeit durch Kesselstein völlig zusetzen.

In der Praxis läßt sich der Kesselstein durch Säuren beseitigen. Sofern es sich um Kupfer, Messing od.dgl. Metalle handelt, können zum Entfernen von Kesselstein verdünnte Lösungen von Milchsäure oder Essigsäure verwendet werden. Die Hersteller bzw. Verteiler von elektrisch betriebenen Dampfbügeleisen empfehlen daher in aller Regel innerhalb bestimmter Zeitintervalle ein Entkalken. Die Zeitabstände, in denen ein solches Entkalken durchgeführt werden muß, sind aber von dem Härtegrad des benutzten Leitungswassers abhängig.

Es sind auch sogenannte Entkalkungsanzeigevorrichtungen bekannt, die vielfach auf elektrischer oder elektronischer Basis arbeiten. Sie haben sich in der Praxis nicht durchsetzen können, nicht zuletzt deshalb, weil sie einmal einen erheblichen technischen Aufwand erfordern und zum anderen, weil sie trotzdem nicht das gewünschte, optimale Ergebnis bringen.

Darüber hinaus gibt es auch mehrere Ausführungsformen von Dampfbügeleisen der eingangs näher gekennzeichneten Art, bei denen ein Entkalkungsmittel des Wassers benutzt wird. Ein solches Dampfbügeleisen ist in der JP-OS 60-160997 offenbart. Bei dieser Ausführungsform des Dampfbügeleisens ist im Bereich der Ausflußöffnung des Wasserbehälters ein Entkalkungsmittel angeordnet. Dieses Entkalkungsmittel befindet sich in einem rohrförmigen Verbindungsstück zwischen dem Wasserbehälter und der Verdampferkammer des Dampfbügeleisens. An sich ist es vorteilhaft, ein Entkalkungsmittel im Bereich der Austrittsöffnung des Wasserbehälters anzuordnen, weil dann in die Verdampferkammer nur entkalktes Wasser gelangt. Jedoch hat diese bekannte Ausbildung des Dampfbügeleisens auch Nachteile, einmal bereitet es Schwierigkeiten, das Entkalkungsmittel in das rohrförmige Verbindungsstück einzubringen, weil es in einem verhältnismäßig schwer zugänglichen Bereich des Innenraumes des Gehäuses liegt. Zum anderen ist die im Verbindungsstück unterzubringende Menge an Entkalkungsmittel relativ klein. Der Benutzer dieses bekannten Dampfbügeleisens hat keine Möglichkeit, die Beschaffenheit des Entkalkungsmittels schnell und einfach zu überprüfen. Darüber hinaus ist ein Auswechseln des verbrauchten Entkalkungsmittels schwierig.

Durch die GB-PS 1 022 697 ist ein Dampfbügeleisen bekanntgeworden, bei dem ein Entkalkungsmittel im Bereich des Einlasses des Wasserbehälters angeordnet ist, wobei das Entkalkungsmittel zum Erkennen seiner Beschaffenheit von außen durch ein Sichtfenster sichtbar ist. Bei diesem Dampfbügeleisen befindet sich das Entkalkungsmittel in einem Behälter, der in einer Ausnehmung des Handgriffes des Dampfbügeleisens untergebracht ist. Diese Ausnehmung ist zur Außenseite des Handgriffes hin durch einen entfernbaren Wandungsteil verschlossen, der seinerseits das Sichtfenster aufweist. Nachteilig ist dabei, daß das Entkalkungsmittel im Bereich des Einlasses des Wasserbehälters angeordnet ist. Dadurch gestaltet sich das Befüllen des Wasserbehälters schwierig, weil das Durchfließen des Wassers durch das Entkalkungsmittel langwierig ist. Darüber hinaus ist das Sichtfenster ein Bestandteil eines Teilstückes des Handgriffes des Dampfbügeleisens. Der das Entkalkungsmittel aufnehmende Behälter hat keinen durchsichtigen Bereich.

Die DE 3 033 964 A1 zeigt ein elektrisch beheiztes Dampfbügeleisen, in dessen Wasserbehälter ein Enthärter (ein Entkalkungsmittel) angeordnet ist, wobei der Enthärter durch eine siebartige, wasserdurchlässige Wandung vom Inneren des Wasserbehälters getrennt ist. Dabei ist auch vorgesehen, den Enthärter in einer Patrone mit siebartiger Wandung unterzubringen. Eine solche Patrone ist mit ihrer wasserdurchlässigen Wandung - die Wasserbehälterwandung durchdringend - im Wasserbehälterinneren angeordnet. Der wasserundurchlässige Patronenboden ist dabei mit dem Außenmantel des Wasserbehälters lösbar verbunden. Bei einer konkreten Ausführungsform ist die Patrone in die Behälterwandung des Wasserbehälters geschraubt, und es ist zwischen der Patrone und dem Wasserbehälter eine Dichtung vorgesehen. Es ist bei diesem bekannten Dampfbügeleisen auch offenbart, eine transluzente Tankwandung zu benutzen, um dem Benutzer die Möglichkeit zu geben, feststellen zu können, ob der Enthärter verbraucht ist. Dies kann dadurch festgestellt werden, daß ein Farbumschlag des Enthärters oder eines beigemischten Indikators erfolgt. Bei dieser bekannten Ausführungsform des Dampfbügeleisens erfolgt keine Anordnung der den Enthärter enthaltenden Patrone im Bereich des Auslasses des Wasserbehälters. Vielmehr ragt die Patrone frei in den Wasserbehälter hinein, derart, daß sie vom Wasser völlig umspült werden kann.

Bei einer Alternativlösung des Dampfbügeleisens nach DE 3 o33 964 A1 ist vorgesehen, die Enthärtermasse lose in den Wasserbehälter zu geben. Behältereinlauf und Behälterauslauf sind dabei durch Siebe verschlossen. Diese sollen einmal verhindern, daß der Enthärter in die Verdampfungskammer gelangt und zum anderen sollen sie dafür sorgen, daß bei Bedarf der Wasserbehälterinhalt ausgeleert werden kann, ohne daß der Enthärter verlorengeht. Zur Entfernung des verbrauchten Enthärters ist in der Behälterwand eine verschließbare Öffnung vorgesehen.

Eine Anordnung des Entkalkungsmittels im Bereich des Auslasses eines Wasserbehälters ist aus der DE-A 3 o14 493 für ein Haushaltsgerät mit Heißwasserbeiter, insbesondere einer Kaffeemaschine bekannt.

Durch die US-PS 4 565 o19 ist ein mehrteiliges Gerät bekanntgeworden, welches beim Bügeln von Textilien benutzt werden soll. Zu diesem Gerät gehört ein kastenförmiges Gehäuse, dessen obere Seite zum Aufstellen eines Dampfbügeleisens verwendet werden soll. Auf der Oberseite des Gehäuses ist ein Wasserbehälter derart angeordnet, daß sein Verschwenken in zwei Endlagen möglich ist. In der wirksamen einen Endlage kann dem Wasserbehälter Wasser entnommen werden, was in der anderen Endlage nicht möglich ist. In der wirksamen Endlage des Wasserbehälters kann das Wasser durch eine Öffnung in seiner Wand abfließen. Es gelangt über nachgeschaltete Führungs- und Regeleinrichtungen in eine Rohrleitung, deren anderes Ende an eine Patrone angeschlossen ist, die mit einem Entkalkungsmittel bzw. mit einem Wasserweichmacher gefüllt ist. In der Patrone wird das Wasser behandelt und kann dann von dort entkalkt weitergeleitet werden. Oberhalb der Patrone befindet sich in der Oberseite des Gehäuses ein Sichtfenster. Durch dieses besteht für den Benutzer des Gerätes die Möglichkeit der Überwachung des Entkalkungsmittels der Patrone. Das Dampfbügeleisen selbst hat bei dem Gerät nach der US-PS 4 565 o19 weder eine Entkalkungspatrone noch ein Sichtfenster. Diese Teile sind vielmehr in dem kastenförmigen, separaten Gehäuse untergebracht, auf dem das Dampfbügeleisen abgestellt werden kann.

Die Erfindung will die bekannten Dampfbügeleisen nach der JP-OS 6o-16o997 weiter verbessern.

Der Erfindung liegt die Aufgabe zugrunde, elektrisch betriebene Dampfbügeleisen dieser Art so weiter zu verbessern, daß ein leichtes Auswechseln des Entkalkungsmittels aus dem Aufnahmeraum Im Gehäuse des Dampfbügeleisens möglich ist, wobei zugleich Teile des Aufnahmeraumes zum Erkennen der Beschaffenheit des Entkalkungsmittels dienen sollen.

Erfindungsgemäß ist diese Aufgabe dadurch gelöst, daß das Dampfbügeleisen ein Sichtfenster zum Erkennen der Beschaffenheit des Entkalkungsmittels von außen, insbesondere seines Farbzustandes aufweist und der Aufnahmeraum eine wenigstens bereichsweise durchsichtige Umfangswand aufweist, durch welche das Entkalkungsmittel sichtbar ist und daß der Aufnahmeraum für das Entkalkungsmittel an einem Halter angeordnet ist, der einen Durchbruch der Rückwand des Dampfbügeleisens durchgreift und das Sichtfenster trägt, welches den Durchbruch verschließt und daß der Halter Führungs- und Rastelemente zu seiner lösbaren Anbringung an der Rückwand des Dampfbügeleisens aufweist.

Die erfindungsgemäße Ausbildung eines elektrisch betriebenen Dampfbügeleisens bringt gegenüber der obengenannten japanischen Offenlegungsschrift beachtliche Vorteile. Der Benutzer des Dampfbügeleisens hat jederzeit die Möglichkeit - was an sich bekannt ist - zu kontrollieren, ob das Entkalkungsmittel noch wirksam ist. Er kann durch das Sichtfenster die Beschaffenheit des Entkalkungsmittels feststellen, insbesondere ob ein Farbumschlag stattgefunden hat.

Ein weiterer Vorteil der Erfindung besteht darin, daß der Aufnahmeraum für das Entkalkungsmittel selbst bereichsweise eine durchsichtige Umfangswand aufweist, durch welche das Entkalkungsmittel sichtbar ist.

Da der Aufnahmeraum für das Entkalkungsmittel an einem Halter angeordnet ist, der einen Durchbruch der Gehäusewand des Dampfbügeleisens durchgreift und das Sichtfenster trägt, welches den Durchbruch verschließt, ist sowohl ein leichtes Anbringen als auch ein Abnehmen des Aufnahmeraumes am bzw. vom Gehäuse des Dampfbügeleisens möglich.

Es empfiehlt sich, den Boden des Aufnahmeraumes für das Entkalkungsmittel als Bodensieb auszubilden, durch welches das enthärtete Wasser der Verdampferkammer zuführbar ist.

Zweckmäßig ist es, daß das durch das Bodensieb des Aufnahmeraumes austretende enthärtete Wasser einer Fördereinrichtung, wie einer Wasserpumpe, einer Dosiereinrichtung, wie einem Tropfventil, zuführbar ist und von dort dosiert in die Verdampferkammer des Dampfbügeleisens gelangt.

Es empfiehlt sich, daß die Umfangswand des Aufnahmeraumes über Verbinder mit dem Sichtfenster verbunden ist und daß die Verbinder und die Begrenzungswandungen des Durchbruches der Rückwand die zusammenwirkende Führungs- und/oder Rastelemente aufweisen.

Auf der Zeichnung ist die Erfindung in einem Ausführungsbeispiel dargestellt und zwar zeigen:

Fig. 1      in Seitenansicht ein erfindungsgemäßes elektrisch betriebenes Dampfbügeleisen mit integriertem Wasserbehälter,

Fig. 2      im vergrößerten Maßstab, teilweise weggebrochen, teilweise in Ansicht und teilweise weggeschnitten den rückwärtigen, das Entkalkungsmittel aufweisenden Teil des Dampfbügeleisens gemäß der Fig. 1 der Zeichnung,

Fig. 3      im nochmals vergrößerten Maßstab und im Schnitt, teilweise weggebrochen, denjenigen Teil der Rückwand des Dampfbügeleisens nach der Fig. 1, in dem der Halter für das Entkalkungsmittel angebracht ist und

Fig. 4      einen Schnitt durch die Rückwand des Bügeleisens entlang der Linie IV-IV der Fig. 3.

Es sei zunächst erwähnt, daß in den Figuren der Zeichnungen nur diejenigen Teile eines elektrisch betriebenen Dampfbügeleisens wiedergegeben sind, die für das Verständnis der Erfindung Bedeutung haben. So fehlen insbesondere die Regel- und Steuereinrichtungen des Dampfbügeleisens und auch die elektrischen Anschlüsse sowie die Heizung für die Sohlenplatte. Ferner sind in den Figuren der Zeichnungen Fördereinrichtungen, wie Wasserpumpen, Tropfventile od.dgl. nicht mit dargestellt. Von diesen sind teilweise lediglich die Handhaben bzw. Bedienungsknöpfe ersichtlich. Im übrigen können alle in den Zeichnungen fehlenden Teile einen an sich bekannten Aufbau haben und in ebenfalls an sich bekannter Weise im oder am Bügeleisen angeordnet werden. Dies gilt auch für die elektrische Versorgungsleitung.

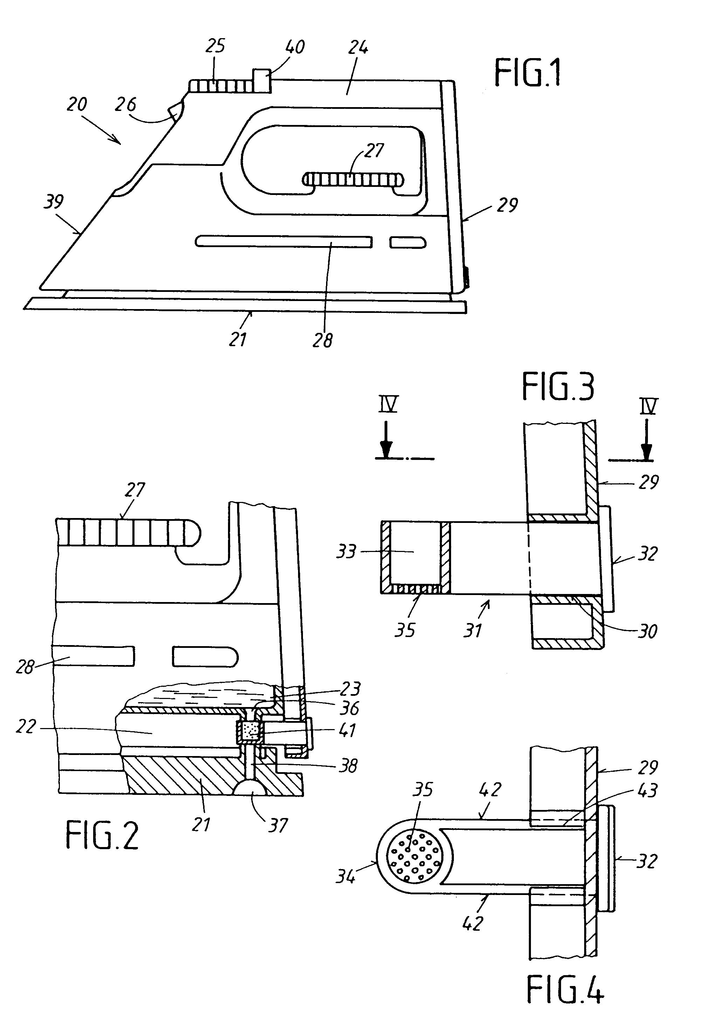

In den Figuren 1 bis 4 der Zeichnungen ist die erfindungsgemäße Ausführungsform des elektrisch betriebenen Dampfbügeleisens dargestellt. Dieses ist generell mit 2o bezeichnet,. Das Dampfbügeleisen 2o hat ein Gehäuse 39, das in bekannter weise aus mehreren Teilen zusammengesetzt sein kann. Das Gehäuse 39 ist nach unten hin durch eine Sohlenplatte 21 verschlossen. Die Sohlenplatte kann in bekannter Weise mit einer Vielzahl von Auslaßöffnungen 37 versehen sein, von denen in der Fig. 2 der Zeichnung nur eine schematisch dargestellt ist. Die Anzahl und die Anordnung der Auslaßöffnungen ist variabel. Auf der der Sohlenplatte gegenüberliegenden Seite hat das Gehäuse 39 einen Handgriff 24. Unterhalb desselben liegt ein Stellrad 27 für die Temperaturregelung. In Höhe der Oberkante des Handgriffes 24 ist in bekannter Weise ein Drehknopf 25 angeordnet, mit dem z.B. eine stufenlose Regulierung der Pflegedampfmenge möglich ist. Seitlich neben dem Drehknopf 25 ist eine Drucktaste 4o vorgesehen. Durch Druck auf diese Wassersprühtaste ist eine Befeuchtung der zu bügelnden Stoffe möglich. Dazu dient die im Bereich der Stirnfläche des Gehäuses 39 angeordnete Sprühdüse 26. Die mit dem Stellrad 27 , dem Drehknopf 25, der Drucktaste 4o und der Sprühdüse 26 zusammenwirkenden Teile des elektrisch betriebenen Dampfbügeleisens 2o sind bekannt und daher weder gezeichnet noch beschrieben.

Im Bereich der Seitenwand des Gehäuses 39 befindet sich eine Wasserstandsanzeige 28, durch die der Benutzer erkennen kann, wie-viel Wasser sich noch in dem Wasserbehälter 23 befindet, der im Inneren des Gehäuses 39 in bekannter Weise untergebracht ist. Oberhalb der Sohlenplatte 21 liegt eine Verdampferkammer 22, die ebenfalls eine bekannte Ausbildung aufweisen kann und in weiter bekannter Weise mit den im Inneren des Gehäuses untergebrachten Steuer- und Regeleinrichtungen zusammenwirkt.

Der Wasserbehälter 23 hat im Bereich der Rückwand 29 des Gehäuses 39 des Dampfbügeleisens 2o liegend einen Auslaß 36, dem erfindungsgemäß ein Entkalkungsmittel 41 nachgeschaltet ist.

Um das Entkalkungsmittel 41 in den Bereich des Auslasses 36 des Wasserbehälters 23 bringen zu können, ist in dem unteren Bereich der Rückwand 29 des Gehäuses 39 ein Durchbruch 3o vorgesehen, durch den ein Halter 31 hindurchgeführt werden kann. Bei dem Halter handelt es sich um gewählten Ausführungsbeispiel um einen im wesentlichen einstückigen Kunststoffkörper, der auf seinem im Inneren des Gehäuses 39 liegenden Ende einen Aufnahmeraum 33 für das Entkalkungsmittel 41 aufweist. Der Boden des Aufnahmeraumes 33 ist als Siebboden 35 ausgebildet. Der Aufnahmeraum 33 wird von einer umlaufenden Umfangswand 34 eingegrenzt, die nach oben hin offen ist. In den Aufnahmeraum 33 wird das Entkalkungsmittel 41 eingebracht. Dies kann entweder in fester, gepreßter Form geschehen oder aber es kann eine Refillpatrone eingesetzt werden, also eine solche, die nach Verbrauch des in ihm enthaltenen Entkalkungsmittels wieder neu gefüllt werden kann.

Die Fig. 4 läßt erkennen, daß der Halter 31 zwei im Abstand und parallel zueinander angeordnete Verbinder 42 aufweist, die mit Führungs- und/oder Rastelementen 43 ausgerüstet sind. Diese wirken mit den Gegenrasten bzw. Gegenführungen im Bereich der Begrenzungswand des Durchbruches 3o der Rückwand 29 zusammen. Es kann sich dabei um Feder und Nut handeln. Daneben können aber auch einfache Rasten und Gegenrasten bekannter Ausbildung benutzt werden. Es ist dabei gleichgültig, ob die Rasten an den Verbindern oder an den Begrenzungswandungen angebracht sind oder umgekehrt.

An dem aus dem Durchbruch herausragenden Ende hat der Halter 31 ein Sichtfenster 32. Durch dieses Sichtfenster hindurch kann der Benutzer des Dampfbügeleisens erkennen, ob das in dem Aufnahmeraum 33 enthaltene Entkalkungsmittel noch wirksam ist. Dazu ist die dem Sichtfenster 32 zugekehrte Seite der Umfangswand 34 durchsichtig. Das Entkalkungsmittel 41 ist dann unwirksam, wenn ein Farbumschlag erfolgt. Es sei an dieser Stelle erwähnt, daß als Entkalkungsmittel im Handel befindliche Chemikalien eingesetzt werden können.

Nach dem Verbrauch des Entkalkungsmittels 33 kann der Halter 31 in einfacher Weise vom Benutzer aus der Rückwand 29 herausgezogen werden. Es erfolgt dann das Entfernen des verbrauchten Entkalkungsmittels und das Neufüllen des Aufnahmeraumes 33, wobei es dem Benutzer freisteht, ob er ein festes gepreßtes Entkalkungsmittel oder eine Refillpatrone benutzt.

Es bleibt noch nachzutragen, daß das enthärtete Wasser aus dem Bodensieb 35 den Aufnahmeraum verläßt und dann beispielsweise über Versorgungsleitungen 38 weitergeleitet wird. Zweckmäßig ist es aber, wenn das enthärtete Wasser über Förder- und Steuereinrichtungen z.B. einem Tropfventil zugeleitet wird. Von dort aus kann es dosiert in die Verdampfungskammer 22 überführt werden. In der Fig. 2 der Zeichnung sind die vorhandenen Versorgungsleitungen nur schematisch mit 38 gekennzeichnet. Die an sich bekannten Förder- und Dosiereinrichtungen für das enthärtete Wasser sind der Einfachheit halber fortgelassen.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. Insbesondere kann die Erfindung auch bei anderen an sich bekannten Ausführungsformen von Dampfbügeleisen eingesetzt werden. Ferner können die Entkalkungsmittel eine andere als die dargestellte Ausbildung erhalten. Insbesondere ist eine Anpassung an den jeweils vorhandenen Aufnahmeraum möglich, soweit es sich um kompaktförmige, feste Entkalkungsmittel handelt. Soweit Refillpatronen benutzt werden, können diese ebenfalls der Gestalt und den Abmessungen des Aufnahmeraumes angepaßt werden, in denen sie untergebracht werden sollen. Als Entkalkungsmittel lassen sich alle im Handel befindlichen Chemikalien benutzen, die dem Enthärten von Wasser dienen. Bei der Dimensionierung des Entkalkungsmittels ist darauf zu achten, daß ein zügiger Durchlaß des Wassers erzielt wird. Darüber hinaus kann die Erfindung auch bei anderen elektrisch betriebenen Haushaltsgeräten eingesetzt werden, die mit heißem Wasser arbeiten und bei denen damit das Problem des Ansetzens von Kesselstein besteht. Gedacht ist z.B. an Kaffee- oder Teeautomaten od.dgl.

Bezugszeichenliste :

| | |
|---|---|
| 2o | - Dampfbügeleisen |
| 21 | - Sohlenplatte (von 2o) |
| 22 | - Verdampferkammer (von 2o) |
| 23 | - Wasserbehälter |
| 24 | - Handgriff |
| 25 | - Drehknopf |
| 36 | - Sprühdüse |
| 27 | - Stellrad (für Temperaturregelung) |
| 28 | - Wasserstandsanzeige (für 23) |
| 29 | - Rückwand (von 2o) |
| 3o | - Durchbruch (in 29) |
| 31 | - Halter |
| 32 | - Sichtfenster |
| 33 | - Aufnahmeraum für Entkalkungsmittel |
| 34 | - Umfangswand( von 33) |
| 35 | - Bodensieb |
| 36 | - Auslaß (von 23) |
| 37 | - Auslaßöffnung (in 21) |
| 38 | - Verbindungsleitung |
| 39 | - Gehäuse (von 2o) |
| 4o | - Drucktaste |
| 41 | - Entkalkungsmittel |
| 42 | - Verbinder (an 31) |
| 43 | - Führungs- und/oder Rastelemente |

**Patentansprüche**

1.  Elektrisch betriebenes Dampfbügeleisen (2o) mit einem einen Handgriff (24) aufweisenden Gehäuse, dessen untere Öffnung durch eine mit Auslaßöffnungen versehene Sohlenplatte verschlossen ist sowie mit einem Wasserbehälter, einem Aufnahmeraum (33) für ein Entkalkungsmittel (41), der sich an den Auslaß (36) des Wasserbehälters (23) anschließt und einer damit unter Zwischenschaltung einer Regeleinrichtung verbindbaren Verdampferkammer und mit einer regelbaren Heizeinrichtung, **dadurch gekennzeichnet,** daß das Dampfbügeleisen (2o) ein Sichtfenster (32) zum Erkennen der Beschaffenheit des Entkalkungsmittels (41) von außen, insbesondere seines Farbzustandes, aufweist und der Aufnahmeraum (33) eine wenigstens bereichsweise durchsichtige Umfangswand (34) aufweist, durch welche das Entkalkungsmittel (41) sichtbar ist und daß der Aufnahmeraum (33) für das Entkalkungsmittel (41) an einem Halter (31) angeordnet ist, der einen Durchbruch (3o) der Rückwand (29) des Dampfbügeleisens (2o) durchgreift und das Sichtfenster (32) trägt, welches den Durchbruch (3o) verschließt und daß der Halter (31) Führungsund Rastelemente (43) zu seiner lösbaren Anbringung an der Rückwand (29) des Dampfbügeleisens (2o) aufweist.

2. Dampfbügeleisen nach Anspruch 1, dadurch gekennzeichnet, daß der Boden des Aufnahmeraumes (33) für das Entkalkungsmittel (41) als Bodensieb (35) ausgebildet ist, durch welches das enthärtete Wasser der Verdampferkammer (22) zuführbar ist.

3. Dampfbügeleisen nach Anspruch 1 und 2, dadurch gekennzeichnet, daß das durch das Bodensieb (35) des Aufnahmeraumes (33) austretende enthärtete Wasser einer Fördereinrichtung, wie einer Wasserpumpe, einer Dosiereinrichtung, wie einem Tropfventil, zuführbar ist und von dort dosiert in die Verdampferkammer (22) des Dampfbügeleisens (2o) gelangt.

4. Dampfbügeleisen nach einem oder mehreren der vorangehenden Ansprüche, dadurch gekennzeichnet, daß die Umfangswand (34) des Aufnahmeraumes (35) über Verbinder (42) mit dem Sichtfenster (32) verbunden ist und daß die Verbinder (42) und die Begrenzungswandungen des Durchbruches (3o) der Rückwand (29) die zusammenwirkenden Führungsund/oder Rastelemente (43) aufweisen.

## Claims

1. An electrically operated steam iron (20) comprising a housing which has a handle (24) and the lower opening of which is closed by a sole plate provided with outlet openings, and a water tank, a receiving space (33) for a decalcification agent (41), which connects to the outlet (36) of the water tank (23), and an evaporator chamber which can be connected thereto with the interposition of a regulating device, and a regulatable heating means, characterised in that the steam iron (20) has a sight window (32) for observing the condition of the decalcification agent (41) from the outside, in particular its colour condition, and the receiving space (33) has a peripheral wall (34) which is transparent at least in a region-wise manner and through which the decalcification agent (41) is visible, and that the receiving space (33) for the decalcification agent (41) is arranged on a holder (31) which engages through an opening (30) in the rear wall (29) of the steam iron (20) and carries the sight window (32) which closes the opening (30), and that the holder (31) has guide and retaining elements (43) for releasably mounting same to the rear wall (29) of the steam iron (20).

2. A steam iron according to claim 1 characterised in that the bottom of the receiving space (33) for the decalcification agent (41) is in the form of a bottom sieve (35) through which the softened water can be passed to the evaporator chamber (22).

3. A steam iron according to claim 1 or claim 2 characterised in that the softened water which issues through the bottom sieve (35) of the receiving space (33) can be passed to a conveyor means such as a water pump, a metering means such as a drip valve, and from there passes in a metered fashion into the evaporator chamber (22) of the steam iron (20).

4. A steam iron according to one or more of the preceding claims characterised in that the peripheral wall (34) of the receiving space (35) is connected to the sight window (32) by way of connectors (42) and that the connectors (42) and the boundary walls of the opening (30) in the rear wall (29) have the co-operating guide and/or retaining elements (43).

## Revendications

1. Fer à repasser électrique à vapeur (20) comprenant un corps muni d'une poignée (24), dont l'ouverture inférieure est fermée par une plaque de semelle munie d'ouvertures de sortie, ainsi qu'un réservoir d'eau, un compartiment (33) pour un détartrant (41), qui se raccorde à l'évacuation (36) du réservoir d'eau (23) et une chambre de vaporisation à laquelle il est susceptible d'être relié par l'intermédiaire d'un dispositif de réglage et avec un dispositif de chauffage réglable, caractérisé en ce que le fer à repasser électrique (20) présente un hublot ou une fenêtre de vision ou du regard (32), afin de reconnaître de l'extérieur l'état du détartrant (41), en particulier sa couleur, et le compartiment (33) présente une paroi périphérique (34), transparente au moins par zones, à travers laquelle le détartrant (41) peut être observé et en ce que le compartiment (33) pour le détartrant est disposé sur un support (31), qui traverse une découpe (30) de la paroi arrière (29) du fer à repasser à vapeur (20) et porte la fenêtre de vision (32), qui obture la découpe (30) et en ce que le support (31) présente des éléments de guidage et de blocage (43), en vue d'un montage amovible sur la paroi arrière (29) du fer à repasser à vapeur (20).

2. Fer à repasser à vapeur selon la revendication 1, caractérisé en ce que le fond du compartiment (33) destiné au détartrant (41) est réalisé sous forme de passoire de fond (35), à travers laquelle l'eau adoucie est susceptible d'être amenée à la chambre de vaporisation (22).

3. Fer à repasser à vapeur selon les revendications 1 et 2, caractérisé en ce que l'eau adoucie qui sort par la passoire de fond (35) du compartiment (33) est susceptible d'être amenée à un dispositif de pompage, tel qu'une pompe à eau, et, de là, arrive dosée dans la chambre de vaporisation (22) du fer à repasser à vapeur (20).

4. Fer à repasser à vapeur selon un ou plusieurs des revendications précédentes, caractérisé en ce que la paroi périphérique (34) du compartiment (35) est reliée à la fenêtre de vision (32), par l'intermédiaire d'attaches (42), et en ce que les attaches (42) et les parois de délimitation de la découpe (30) de la paroi arrière (29) présentent les éléments de guidage et/ou de blocage (43) qui fonctionnent en coopération avec des contre-guidages et/ou contre-blocages.

FIG.1

FIG.3

FIG.2

FIG.4